# EUROPÄISCHE PATENTANMELDUNG

(11) **EP 3 002 510 A1**
(43) Veröffentlichungstag der Anmeldung: **06.04.2016**
(21) Anmeldenummer: 14187404.0
(22) Anmeldetag: 02.10.2014
(51) Int. Cl.: F21V 14/00, G02B 3/14, G02B 26/08, G06K 7/10

(54) **Beleuchtungseinrichtung**

(71) Anmelder: SICK AG, 79183 Waldkirch (DE)
(72) Erfinder: Schneider, Dr. Florian, 79276 Reute (DE)
(74) Vertreter: Ludewigt, Christoph

(57) **Zusammenfassung**

Die Erfindung betrifft eine Beleuchtungseinrichtung zum Erzeugen eines Beleuchtungsfeldes für einen optoelektronischen Sensor, die mindestens eine Lichtquelle (9) und eine Beleuchtungsoptik (10, 11) aufweist, welche eine Linse (10) und ein anpassbares optisches Strahlformungselement (11) umfasst, wobei an dem Strahlformungselement (11) ein Druckelement angreift. Bei einer Beleuchtungseinrichtung, welche einfach herstellbar ist und bei welcher eine Hysterese des Beleuchtungsfeldes unterbunden wird, weist das optische Strahlformungselement separate, beweglich gelagerte Mikrolinsen (11) auf, die kugelförmig ausgebildet sind.

## Beschreibung

Die Erfindung betrifft eine Beleuchtungseinrichtung nach dem Oberbegriff von Anspruch 1 und eine Kamera nach dem Oberbegriff von Anspruch 10.

Für die Inspektion oder Vermessung von Objekten werden häufig Kamerasysteme eingesetzt, welche auch zum Lesen von Barcodes weite Verbreitung gefunden haben. Dabei werden Bilder des Objektes erfasst und entsprechend der Aufgabe durch Bildverarbeitungsverfahren ausgewertet. Eine weitere Anwendung von Kameras ist das Lesen von Codes. Derartige kamerabasierte Codeleser lösen die noch weit verbreiteten Barcode-Scanner zunehmend ab. Mit Hilfe eines Bildsensors werden Objekte mit den darauf befindlichen Codes aufgenommen, in den Bildern die Codebereiche identifiziert und dann decodiert.

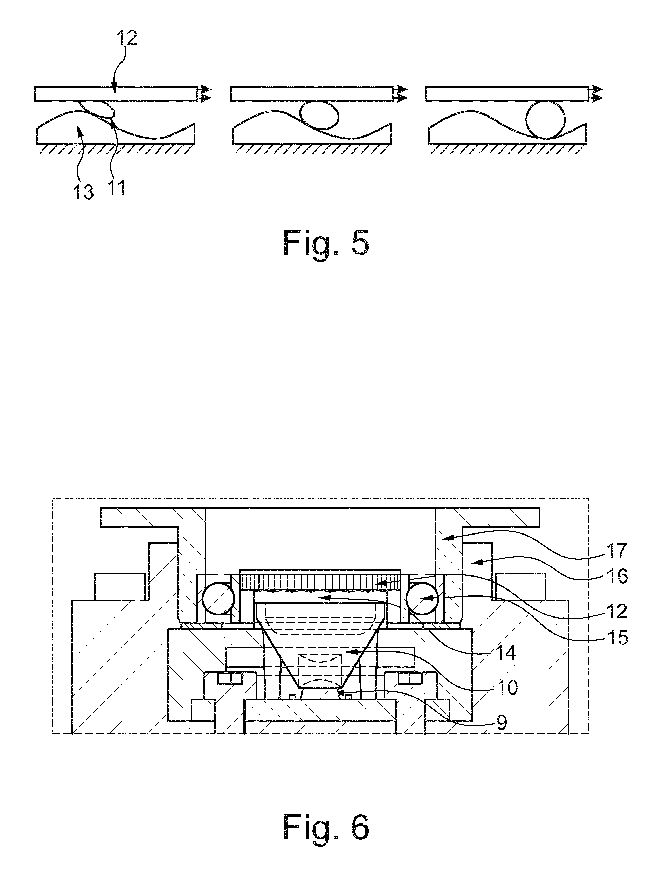

Alle diese Anwendungen haben gemein, dass sie eine Beleuchtung benötigen, um den zu lesenden Barcode bzw. die zu inspizierenden und zu vermessenden Objekte unabhängig vom Umgebungs- oder Fremdlicht zu erfassen. Zu diesem Zweck weisen diese Kamerasysteme Lichtquellen auf, die häufig als LEDs ausgebildet sind. Um deren Licht gezielt auf das zu beleuchtende Feld zu führen, werden entsprechende Optiken verwendet. Aus dem Stand der Technik (Fig. 6) ist eine Beleuchtungsvorrichtung bekannt, bei welcher eine LED 9 eine feste TIR-Linse 10 (Total Internal Reflection) beleuchtet und welche zur effizienten Projektion des Lichtes in die Szene eingesetzt wird. Diese TIR-Linse 10 wird üblicherweise in einem Spritzgussprozess aus einem Polymer hergestellt und mit den LEDs zu einer Beleuchtung assembliert. An die TIR-Linse 10 schließt sich ein Mikrolinsenarray 14 aus Silikon an, auf welchem eine Glasplatte 12 aufliegt, die von einem Kugellager 15 umgeben ist. An der Glasplatte 12 greift ein Drehring 17 mit einem Außengewinde an, welches in einer Halterung 16 mit Innengewinde gelagert ist. Durch die Rotation des Drehringes 17 wird die Glasplatte 12 an das elastische Mikrolinsenarray 14 gedrückt und somit das Mikrolinsenarray 14 deformiert. Durch die Deformation des Mikrolinsenarrays 14 wird das Beleuchtungsfeld eingestellt. Das Kugellager 15 ist notwendig, um die Rotation der Glasplatte 12 durch die Reibung zwischen Mikrolinsenarray 14 und Glasplatte 12 zu verhindern. Ohne Kugellager 15 würde die Rotation der Glasplatte 12 eine Scherung auf das Mikrolinsenarray 14 ausüben. Die beschriebene Beleuchtungseinrichtung weist einen konstruktiv aufwändigen Aufbau auf, da das Kugellager 15 zur Verhinderung der Glasplattenrotation als Zustellung ein Gewinde verwendet.

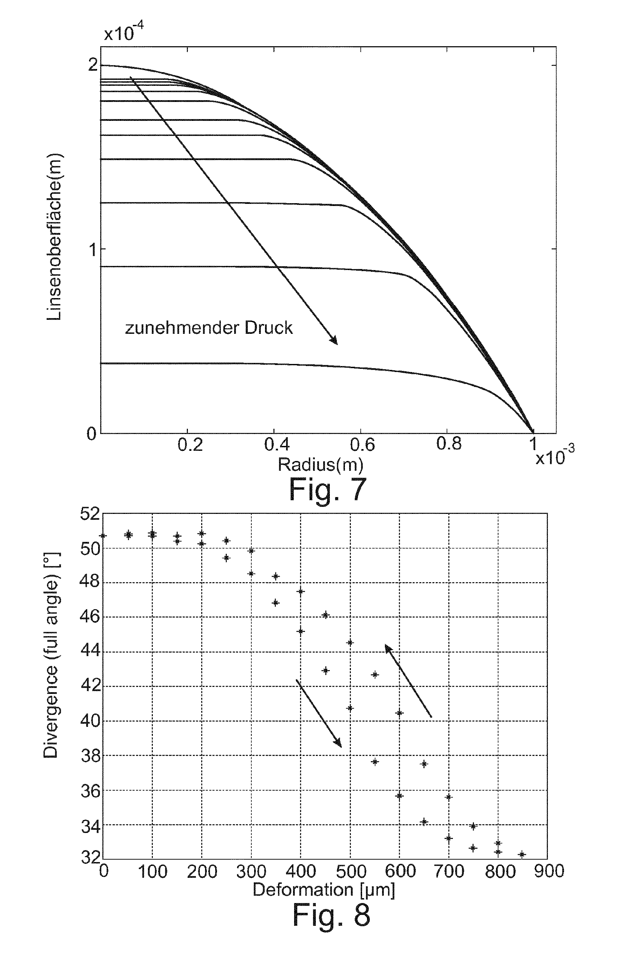

In Fig. 7 ist ein Linsenprofil einer Mikrolinse des Mikrolinsenarrays aus Silikon dargestellt. Im Diagramm ist der Verlauf der Oberfläche der Mikrolinse für einen zunehmenden Druck der Glasplatte 12 auf die Mikrolinse zu sehen, wobei die Oberfläche der Mikrolinse mit zunehmendem Druck verkleinert wird. Wie aus Fig. 8 ersichtlich, aus welcher die Beleuchtungsdivergenz über eine Deformation des Mikrolinsenarrays aufgetragen ist, wird bei einer Deformation von beispielsweise 850 µm eine Reduktion der Divergenz von 51° auf 32° eingestellt. Dabei ist eine Hysterese zu beobachten, welche durch Oberflächen- und Haftungseffekte an der Glasplatte 12 und an der TIR-Linse 10 bedingt ist.

Aus der DE 602 15 093 T2 ist eine steuerbare flüssige Mikrolinse bekannt, welche aus einer Isolierschicht und einem Tröpfchen einer transparenten leitenden Flüssigkeit besteht, die auf einem Trägermaterial angeordnet sind. Die Mikrolinse enthält mehrere Elektroden, wobei sich die Position der Mikrolinse durch die an den Elektroden jeweilig anliegenden Spannungen verändern lässt.

Es ist Aufgabe der Erfindung, eine Beleuchtungseinrichtung zur Erzeugung eines Beleuchtungsfeldes für einen optoelektronischen Sensor anzugeben, dessen Beleuchtungsoptik konstruktiv einfach herzustellen ist und eine Hysterese der Beleuchtungsdivergenz unterbindet.

Diese Aufgabe wird durch eine Beleuchtungsvorrichtung und eine Kamera nach Anspruch 1 bzw. Anspruch 10 gelöst.

Erfindungsgemäß wird die Aufgabe dadurch gelöst, dass das optische Strahlformungselement separate, beweglich gelagerte Mikrolinsen aufweist, die im druckfreien Zustand kugelförmig ausgebildet sind. Durch die Verwendung einzelner, beweglich gelagerter kugelförmiger Mikrolinsen wird eine Haftung und Reibung der kugelförmigen Mikrolinsen an anderen Komponenten der Beleuchtungsoptik reduziert, wodurch der konstruktive Aufwand bei der Herstellung der Beleuchtungseinrichtung verringert wird. Die Bewegung der kugelförmigen Mikrolinsen hat weiterhin den Vorteil, dass der Hystereseeffekt reduziert wird.

In einer Ausgestaltung sind die kugelförmigen Mikrolinsen zwischen einer Grundplatte und einer Deckplatte gelagert, wobei an der Grundplatte oder der Deckplatte das Druckelement angreift. Aufgrund der beweglichen kugelförmigen Mikrolinsen kann auf das Kugellager und somit auch auf ein Gewinde verzichtet werden, was die Konstruktion der Beleuchtungseinrichtung wesentlich vereinfacht.

In einer Ausgestaltung bestehen die kugelförmigen Mikrolinsen aus einem elastischen Material und die Grundplatte und die Deckplatte aus einem festen Material.

Alternativ können die kugelförmigen Mikrolinsen aber auch aus einem festen Material und die Grundplatte und die Deckplatte aus einem elastischen Material bestehen. Dabei ist es in dieser Alternative von Vorteil, wenn die Brechungsindices der Mikrolinsen, der Grundplatte und der Deckplatte möglichst ähnlich sind, denn dann tritt die größte Strahldivergenzänderung bei Druckausübung, also Verformung der Grund- und Deckplatte, auf.

Eine weitere Alternative besteht darin, dass die kugelförmigen Mikrolinsen und die Grundplatte und die Deckplatte aus einem vollelastischen oder teilelastischen Material bestehen. Bei dem elastischen Material kann vorzugsweise Silikon verwendet werden, während als festes Material Glas oder ein Polymer genutzt wird. Um den Hub nicht über ein verschleißanfälliges Gewinde realisieren zu müssen, weist eine Oberfläche der Grundplatte und/oder der Deckplatte eine Wellenstruktur auf.

Vorteilhafterweise ist diese Wellenstruktur niederfrequent ausgebildet, wobei über eine Rotation gleichzeitig eine Deformation der kugelförmigen Mikrolinse bzw. der Grundplatte und/oder der Deckplatte erfolgt, wenn diese jeweils aus einem elastischen Material bestehen.

Um den kugelförmigen Mikrolinsen eine Richtung vorgeben zu können, ist eine sehr kleine Kavität in die Grundplatte oder die Deckplatte eingebracht.

In einer Variante ist die Linse der Beleuchtungsoptik als TIR-Linse ausgebildet, um das Licht der Lichtquelle gezielt in das Beleuchtungsfeld zu führen, wobei die TIR-Linse zwischen der Lichtquelle und dem Strahlformungselement angeordnet ist. Eine TIR-Linse (Total Internal Reflection) weist eine Geometrie auf, die dafür sorgt, dass das eingetretene Licht in hinreichend flachem Winkel auf die Seitenflächen fällt, um die für das Linsenmaterial geltenden Bedingungen für eine Totalreflexion zu erfüllen. Dadurch wird das Licht ähnlich wie in einem Lichtleiter geführt. Zusätzlich zu der bloßen Lichtweiterleitung hat aber aufgrund der Geometrie der TIR-Linse und insbesondere ihrer Mantelfläche das austretende Lichtbündel eine gewünschte Strahlform.

Zur weiteren Vereinfachung des konstruktiven Aufwandes der Beleuchtungseinrichtung bildet die TIR-Linse die Grundplatte zur Aufnahme der kugelförmigen Mikrolinsen.

Eine Weiterbildung der Erfindung betrifft eine Kamera, insbesondere einen kamerabasierten Codeleser oder eine Kamera zur Inspektion oder Vermessung von Objekten, mit einem Bildsensor zur Aufnahme von Bilddaten, einer Auswerteeinheit zum Lesen von Codes oder Bestimmen von Objekteigenschaften aus den Bilddaten und einer Beleuchtungseinrichtung. Bei einer Kamera, bei welcher die Geometrie der Beleuchtungseinrichtung vereinfacht wird, ist die Beleuchtungseinrichtung nach mindestens einem in dieser Schutzrechtsanmeldung dargestellten Merkmal ausgebildet.

Die Erfindung lässt zahlreiche Ausführungsformen zu. Eine davon soll anhand der in der Zeichnung dargestellten Figuren näher erläutert werden.

Es zeigen:
- Fig. 1: eine schematische Schnittdarstellung einer Kamera mit einer Beleuchtungseinrichtung,
- Fig. 2: ein Ausführungsbeispiel einer erfindungsgemäßen Beleuchtungseinrichtung,
- Fig. 3: ein erstes Ausführungsbeispiel der Funktionsweise der Beleuchtungseinrichtung nach Fig. 2,
- Fig. 4: ein weiteres Ausführungsbeispiel der Funktionsweise der Beleuchtungseinrichtung nach Fig. 2,
- Fig. 5: ein weiteres Ausführungsbeispiel der Funktionsweise der Beleuchtungseinrichtung nach Fig. 2,
- Fig. 6: ein Ausführungsbeispiel einer Beleuchtungseinrichtung nach dem Stand der Technik,
- Fig. 7: ein Linsenprofil eines Mikrolinsenarrays bei zunehmendem Druck nach Fig. 6,
- Fig. 8: eine Beleuchtungsdivergenz über die Deformation eines Mikrolinsenarrays gemäß dem Stand der Technik.

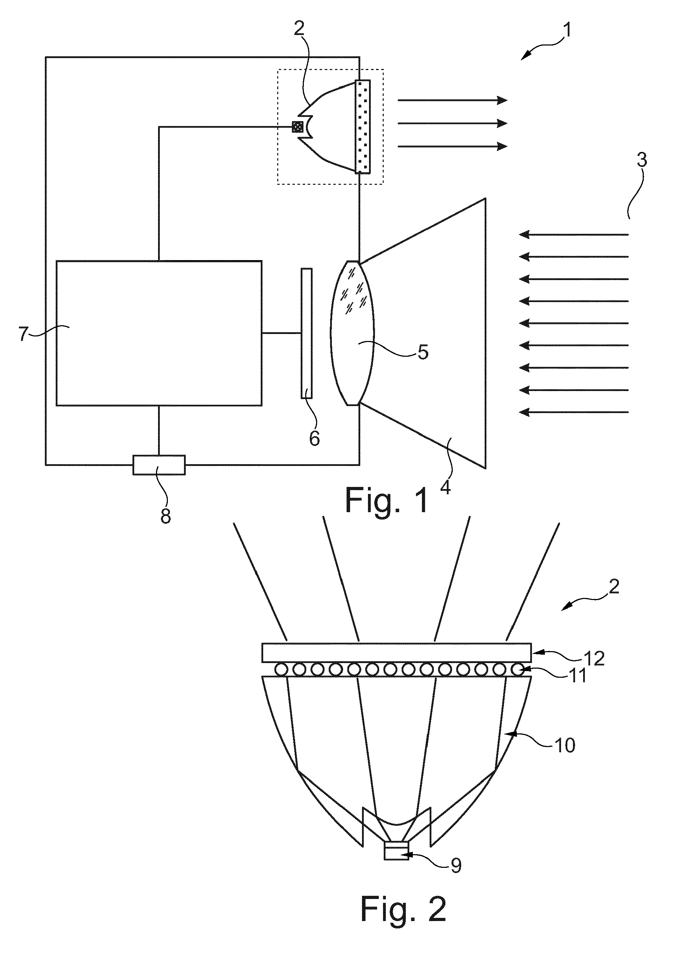

Fig. 1 zeigt eine schematische Schnittdarstellung einer Kamera 1. Die Kamera 1 kann beispielsweise zur Vermessung oder Inspektion von Objekten sowie zum Erfassen von linearen oder mehrdimensionalen Codes und Auslesen von deren Inhalten eingesetzt werden. Die Kamera 1 ist mit einer Beleuchtungseinrichtung 2 zum Ausleuchten eines Aufnahmebereiches 3 der Kamera 1 ausgerüstet. Die Kamera 1 erfasst Licht aus einem Aufnahmebereich 3 durch ein Aufnahmeobjektiv 4, in dem nur eine dargestellte Linse 5 die Aufnahmeoptik repräsentiert. Ein Bildsensor 6, beispielsweise ein CCD- oder CMOS-Chip mit einer Vielzahl von zu einer Zeile oder einer Matrix angeordneten Pixelelementen, erzeugt Bilddaten des Aufnahmebereiches 3 und der dort gegebenenfalls vorhandenen Objekte und Codebereiche und gibt diese an eine Auswerteeinheit 7 weiter. Die Auswerteeinheit 7 ist auf einem oder mehreren digitalen Bausteinen implementiert, beispielsweise Mikroprozessoren, ASICs, FPGAs oder dergleichen, die auch ganz oder teilweise außerhalb der Kamera 1 vorgesehen sein können und steuert zugleich die Beleuchtungseinrichtung 2.

Die Bilddaten werden in der Auswerteeinheit 7 verarbeitet, beispielsweise vorbereitend gefiltert, geglättet, helligkeitsnormiert, auf bestimmte Bereiche zugeschnitten und binarisiert. Dann werden interessierende Strukturen erkannt und segmentiert, beispielsweise einzelne Objekte, Linien oder Codebereiche. Diese Strukturen werden vermessen oder auf bestimmte Eigenschaften hin überprüft. Sofern Codes gelesen werden sollen, werden diese identifiziert und decodiert.

Am Ausgang 8 der Kamera 1 können Daten ausgegeben werden, und zwar sowohl Auswertungsergebnisse wie gelesene Codeinformationen oder ermittelte Abmessungen und Inspektionsergebnisse, als auch Daten in verschiedenen Verarbeitungsstufen, wie Rohbilddaten, vorverarbeitete Bilddaten, identifizierte Objekte oder noch nicht decodierte Codebilddaten.

Anhand von Fig. 2 soll ein Ausführungsbeispiel der erfindungsgemäßen Beleuchtungseinrichtung 2 erläutert werden. Eine Lichtquelle 9, beispielsweise eine LED, strahlt Licht in einem vergleichsweise großen Winkelbereich ab. Eine zugehörige Beleuchtungsoptik umfasst ein strahlführendes Element, beispielsweise eine TIR-Linse 10 und ein Strahlformungselement. Das Strahlformungselement liegt auf der TIR-Linse 10 auf und wird von einer Glasplatte 12 abgedeckt. An der Deckplatte 12 greift ein nicht weiter dargestelltes Druckelement an.

Das Strahlformungselement besteht dabei aus einer Vielzahl einzelner, beweglich ausgebildeter, kugelförmiger Mikrolinsen 11. Diese Mikrolinsen 11 erlauben eine variable Einstellung des Beleuchtungsfeldes sowie der Lichtverteilung innerhalb des Beleuchtungsfeldes.

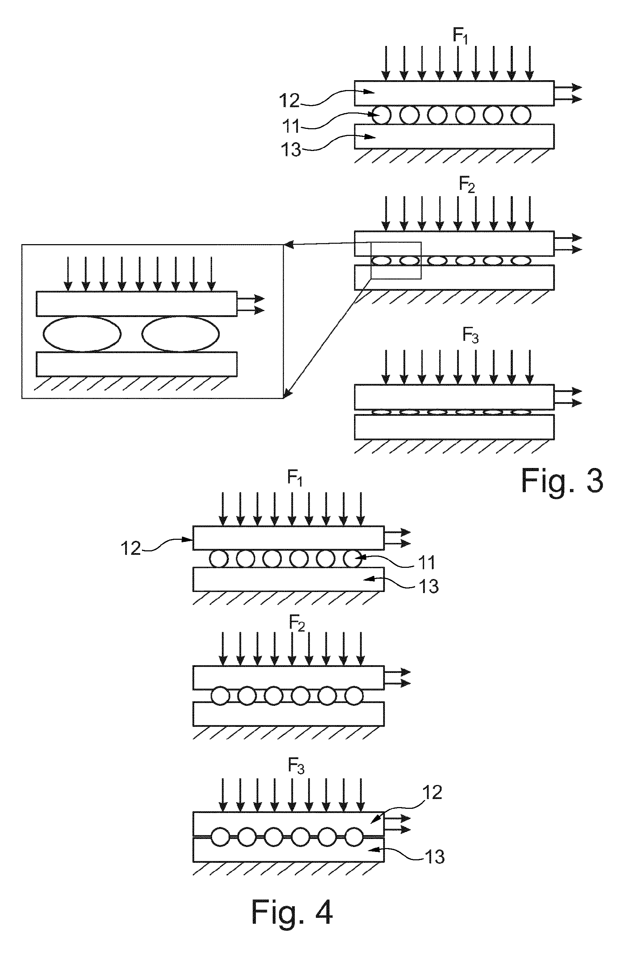

Fig. 3 und 4 zeigen schematische Darstellungen von Ausführungsformen der Beleuchtungseinrichtung 2 mit den kugelförmigen Mikrolinsen 11. In Fig. 3 bestehen die kugelförmigen Mikrolinsen 11 aus einem elastischen Material, während die Deckplatte 12 und die Grundplatte 13, welche durch die TIR-Linse 10 gebildet werden kann, aus einem festen Material hergestellt sind. Als elastisches Material wird beispielsweise Silikon verwendet, während als festes Material für Deck- und Grundplatte 12, 13 Glas oder ein Polymer verwendet wird. Durch das Aufbringen einer Druckkraft werden die aus dem elastischen Material bestehenden kugelförmigen Mikrolinsen 11 deformiert, wobei die Deckplatte 12 lateral verschoben wird. Dadurch verringert sich die Strahldivergenz des Lichtstrahles drastisch. Die einwirkenden Kräfte sind dabei so gestaltet, dass f₁<f₂<f₃ ist. Aufgrund dieser unterschiedlichen angreifenden Kräfte an der Deckplatte 12 werden die Mikrolinsen 11 unterschiedlich stark verformt, wodurch die Strahldivergenz je nach gewünschtem Anwendungsfall einstellbar ist.

In Fig. 4 ist eine ähnliche Ausführungsform der Beleuchtungseinrichtung 2 dargestellt, bei welcher allerdings die kugelförmigen Mikrolinsen 11 aus einem festen Material, wie beispielsweise Glas, bestehen, während die Deckplatte 12 und die Grundplatte 13 aus einem elastischem Material wie Silikon ausgebildet sind. Hier verändert sich aufgrund der unterschiedlichen angreifenden Kräfte f₁, f₂, f₃ die Oberfläche der Deck- bzw. der Grundplatte 12, 13, wodurch eine Veränderung der Strahldivergenz eingestellt wird. Dabei ist es von Vorteil, wenn die Brechungsindices der Mikrolinsen 11, der Grundplatte 13 und der Deckplatte 12 möglichst ähnlich sind, denn dann tritt die größte Strahldivergenzänderung bei Druckausübung, also Verformung der Grund- und Deckplatte, auf.

In Fig. 5 ist ein weiteres Ausführungsbeispiel der Beleuchtungseinrichtung 2 dargestellt, bei welcher die Grundplatte 13 eine niederfrequente Wellenstruktur auf ihrer Oberfläche aufweist. Aufgrund dieser niederfrequenten Wellenstruktur wird aus der Rotation der Deckplatte 12 eine Kompression an den elastischen, kugelförmigen Mikrolinsen 11 hervorgerufen. Um den kugelförmigen Mikrolinsen 11 eine Richtung vorgeben zu können, ist es vorteilhaft, wenn in der Grundplatte 13 oder der Deckplatte 12 eine sehr kleine Kavität ausgebildet ist.

Die mechanische Krafteinwirkung durch das Druckelement für die laterale Verschiebung der Deckplatte 12 kann durch beliebige bekannte Aktoriken erreicht werden, wie beispielsweise durch einen manuellen Schraubmechanismus.

## Patentansprüche

1. Beleuchtungseinrichtung zum Erzeugen eines Beleuchtungsfeldes für einen optoelektronischen Sensor, die mindestens eine Lichtquelle (9) und eine Beleuchtungsoptik (10, 11) aufweist, welche eine Linse (10) und ein anpassbares optisches Strahlformungselement (11) umfasst, wobei an dem Strahlformungselement (11) ein Druckelement angreift, **dadurch gekennzeichnet, dass** das optische Strahlformungselement separate, beweglich gelagerte Mikrolinsen (11) aufweist, die im druckfreien Zustand kugelförmig ausgebildet sind.

2. Beleuchtungseinrichtung nach Anspruch 1, **dadurch gekennzeichnet, dass** die kugelförmigen Mikrolinsen (11) zwischen einer Grundplatte (13) und einer Deckplatte (12) gelagert sind, wobei an der Grundplatte (13) oder der Deckplatte (12) das Druckelement zur Variation eines Beleuchtungsfeldes eingreift.

3. Beleuchtungseinrichtung nach Anspruch 1 oder 2, **dadurch gekennzeichnet, dass** die kugelförmigen Mikrolinsen (11) aus einem elastischen Material und die Grundplatte (13) und die Deckplatte (12) aus einem festen Material bestehen.

4. Beleuchtungseinrichtung nach Anspruch 1 oder 2, **dadurch gekennzeichnet, dass** die kugelförmigen Mikrolinsen (11) aus einem festen Material und die Grundplatte (13) und die Deckplatte (12) aus einem elastischen Material bestehen.

5. Beleuchtungseinrichtung nach Anspruch 1 oder 2, **dadurch gekennzeichnet, dass** die kugelförmigen Mikrolinsen (11) und die Grundplatte (13) und die Deckplatte (12) aus einem vollelastischen oder teilelastischen Material bestehen.

6. Beleuchtungseinrichtung nach Anspruch 4 oder 5, **dadurch gekennzeichnet, dass** die Brechungsindices der Mikrolinsen (11), der Grundplatte (13) und der Deckplatte (12) im Wesentlichen gleich sind.

7. Beleuchtungseinrichtung nach einem der vorhergehenden Ansprüche, **dadurch gekennzeichnet, dass** eine Oberfläche der Grundplatte (13) und/oder der Deckplatte (12) eine insbesondere niederfrequente Wellenstruktur aufweist.

8. Beleuchtungseinrichtung nach mindestens einem der vorhergehenden Ansprüche, **dadurch gekennzeichnet, dass** die Linse der Beleuchtungsoptik (10, 11) als TIR-Linse (10) ausgebildet ist, um das Licht der Lichtquelle (9) gezielt in das Beleuchtungsfeld zu führen, wobei die TIR-Linse (10) zwischen der Lichtquelle (9) und dem Strahlformungselement (11) angeordnet ist.

9. Beleuchtungseinrichtung nach Anspruch 8, **dadurch gekennzeichnet, dass** die TIR-Linse (10) die Grundplatte (13) zur Aufnahme der kugelförmigen Mikrolinsen (11) bildet.

10. Kamera, insbesondere kamerabasierter Codeleser oder Kamera zur Inspektion oder Vermessung von Objekten, mit einem Bildsensor (6) zur Aufnahme von Bilddaten, mit einer Auswerteeinheit (7) zum Lesen von Codes oder Bestimmen von Objekteigenschaften aus den Bilddaten und einer Beleuchtungseinrichtung (2), **dadurch gekennzeichnet, dass** die Beleuchtungseinrichtung (2) nach mindestens einem der vorhergehenden Ansprüche ausgebildet ist.
